# EUROPÄISCHE PATENTSCHRIFT

(11) **EP 0 433 925 B1**
(45) Veröffentlichungstag und Bekanntmachung des Hinweises auf die Patenterteilung: **08.06.1994**
(21) Anmeldenummer: 90124298.2
(22) Anmeldetag: 15.12.1990
(51) Int. Cl.: B23C 5/26, B23B 31/30, F16B 7/04, F16B 21/00

(54) **Hydraulisches Spannelement**
Hydraulic clamping device
Dispositif de serrage hydraulique

(30) Priorität: 18.12.1989 DE 3941765
(43) Veröffentlichungstag der Anmeldung: 26.06.1991
(73) Patentinhaber: ALBERT SCHREM WERKZEUGFABRIK GmbH, D-89537 Giengen (DE)
(72) Erfinder: Müller, Peter, W-8966 Altusried (DE); Bauer, Ulrich, W-7924 Steinheim (DE); Schrem, Monika, W-7928 Giengen (DE)
(74) Vertreter: Wasmuth, Rolf, Dipl.-Ing.

(56) Entgegenhaltungen:
- CH-A- 412 526
- DE-A- 2 544 498
- DE-A- 3 038 549

## Beschreibung

Die Erfindung betrifft ein hydraulisches Spannelement zum axialen Verspannen von Rotationskörpern, beispielsweise scheiben- oder walzenförmigen Werkstücken oder Werkzeugen, insbesondere Walzfräsern, auf einem rotierbaren Dorn, mit einem auf dem Dorn festgelegten Grundkörper und einem im Grundkörper schwimmend gelagerten Ringkolben, der über ein in sich geschlossenes Hydrauliksystem mittels Druckelementen, beispielsweise Druckschrauben,relativ zum Grundkörper axial ausfahrbar ist und das Werkstück bzw. Werkzeug axial fest verspannt.

Derartige hydraulische Spannmuttern stellen eine Weiterentwicklung der mechanischen Spannmuttern dar, indem durch die Hydraulik ein Vielfaches an Spannkraft zur Verfügung gestellt wird. Derart hohe axiale Spannkräfte sind beispielsweise erforderlich, um ein rotierendes Werkzeug auch unter sehr hoher Schnittbelastung während der Bearbeitung eines Werkstückes in seiner Position mit einwandfreiem Rundlauf zu halten.

Üblicherweise wird das hydraulische Spannelement auf das freie Ende eines das Werkzeug, beispielsweise einen Fräser, tragenden Dornes aufgeschraubt, bis es an dem Fräser einen festen Anschlag hat. Durch das Eindrehen von mindestens einer radialen oder axialen Druckschraube wird ein schwimmend im Grundkörper des Spannelements gelagerter Ringkolben axial nach außen gedrückt. Trotz des im Vergleich zur mechanischen Mutter geringeren mechanischen Kraftaufwandes wird durch die Kraftübersetzung im hydraulischen System eine wesentlich größere axiale Spannkraft erzielt.

Da der Ringkolben schwimmend gelagert ist, kann es durch eine ungleiche interne Druckverteilung und ungleiche Reibungsverhältnisse zu einem ungleichmäßigen Ausfahren kommen, was zu einer radialen Verschiebung des Werkzeuges oder auch zu einem axialen Ausweichen, einem sogenannten Abknicken, des freien Dornendes führen kann. Der auf einem Hydraulikpolster schwimmende Ringkolben kann in manchen Fällen den großen Schnittkraftbelastungen keine ausreichende Kraft entgegensetzen, so daß auch dadurch Rundlaufabweichungen der Werkzeuge verursacht werden.

Ein manuelles Einjustieren der Werkzeuge im sogenannten Spitzenbock, also zwischen zwei Spitzen, ist mit den bekannten Spannelementen nur dadurch möglich, daß das Werkzeug so oft gespannt wird, bis die Idealposition in etwa erreicht ist, wenn man auf Hilfsmittel wie Hammer verzichten will. Dieser Trial and Error-Ansatz ist jedoch äußerst unbefriedigend, da die Reduzierung von Nebenzeiten immer mehr an Bedeutung gewinnt.

Der Erfindung liegt somit die Aufgabe zugrunde, die axiale Steifigkeit des hydraulischen Spannelementes zu verbessern, eine gezielte und schnelle Justierung von Rundlauffehlern beim Einrichten zu ermöglichen und für eine radiale Spielfreiheit im Betriebszustand zu sorgen.

Erfindungsgemäß wird diese Aufgabe durch die im Hauptanspruch angegebenen Merkmale gelöst. Der Kern der Erfindung besteht darin, ein Zwischenelement in Form einer Hülse oder dgl. mit federndem radialen Element, vorzugsweise in Form eines federnden Radialflansches, vorzusehen. Diese Hülse wird mit ihrem federnden Radialflansch auf das freie Dornende beispielsweise durch Aufschrauben aufgebracht, wobei auf diese Hülse wiederum eine hydraulische Spannmutter aufgeschraubt oder aufgeschoben wird. Beim Spannen drückt nicht mehr der Ringkolben gegen das Rotationswerkzeug, sondern der federnde radiale Flansch fixiert das Werkzeug. Damit sind Werkzeugverlagerungen nur möglich, wenn die Schnittkräfte größer als die an der Planseite des Radialflansches wirkenden Reibkräfte sind. Ein axiales Ausweichen (Abknicken) des freien Dornendes wird ebenfalls verhindert, da der Ringkolben das Werkzeug nicht mehr direkt belastet, indem der federnde Radialflansch, der nachstehend auch als Tellerflansch bezeichnet wird, zwischengeschaltet ist. Ein ungleichmäßiges Ausfahren des Ringkolbens wird somit bei der erfindungsgemäßen Ausbildung durch den federnden Flansch kompensiert.

Bei einer vorteilhaften Weiterbildung der Erfindung wird auf den Grundkörper der Stellmutter eine weitere mechanische Mutter aufgeschraubt, die am Tellerflansch zur Anlage gebracht werden kann, so daß die radiale Verspannung aufrechterhalten bleibt, auch wenn der hydraulische Ringkolben entlastet wird.

Bei einer vorteilhaften Weiterbildung der Erfindung kann zwischen der zusätzlichen mechanischen Mutter, die als Überwurfmutter ausgebildet ist, und dem Tellerflansch ein Druckring angeordnet sein, der ein vergleichsweise großes radiales Spiel besitzt. Im Querschnitt hat der Druckring ein konisches bzw. keilförmiges Profil, so daß bei einer radialen Verstellung des Druckrings der Flansch einseitig belastet werden kann. Die Verstellung dieses Druckrings kann durch radiale Druckschrauben erfolgen, die in der Überwurfmutter angeordnet sind. Durch eine entsprechende radiale Verstellung des Druckrings können ein abgeknicktes Dornende wieder ausgerichtet und Rundlauffehler minimiert werden. Rundlaufkorrekturen können auf diese Weise gezielt vorgenommen werden, so daß das System aus Spanndorn, Rotationskörper bzw. Werkzeug und Spannelement einfach und schnell ausgerichtet werden kann.

Ein weiterer Vorteil der erfindungsgemäßen Lösung ist darin zu sehen, daß der federnde Tellerflansch den Ringkolben in seine Ausgangslage zurückschiebt, so bald das Spannelement gelöst wird. Diese Rückstellung in die Ausgangsposition muß bei den bekannten hydraulischen Spannelementen in einem separaten Schritt, beispielsweise durch Einspannung zwischen Klemmbacken, vorgenommen werden.

Nachfolgend sind Ausführungsformen der Erfindung anhand der Zeichnung beispielsweise beschrieben. Es zeigen:
- Fig. 1: einen Schnitt durch eine erste Ausführungsform der Erfindung;
- Fig. 2: den Schnitt durch eine zweite Ausführungsform der Erfindung und
- Fig. 3: einen Teilschnitt und eine Teilansicht einer dritten Ausführungsform der Erfindung.

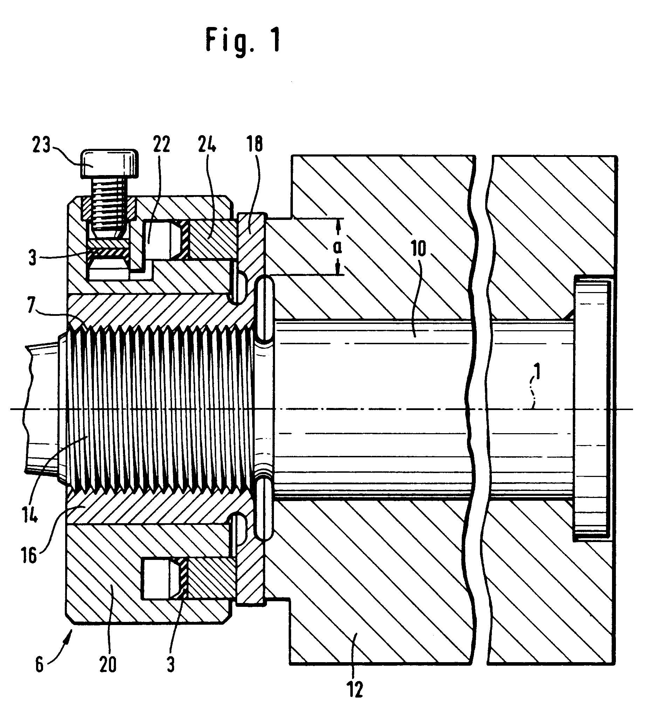

Gemäß der ersten Ausführungsform der Erfindung nach Fig. 1 ist auf einen Dorn 10 ein Rotationskörper, beispielsweise ein Wälzfräser 12, als Werkzeug aufgeschoben. Der Fräser liegt am anderen Dornende gegen einen radialen Bund oder ähnlichen Anschlag an und ist dadurch in seiner Lage festgelegt.

Auf dem anderen, dem freien Ende des Dornes 10 ist im Bereich 14 ein Gewinde 7 vorgesehen, auf das eine Hülse 16 mit federndem Tellerflansch 18 aufgeschraubt ist. Auf der Hülse 16 ist wiederum der Grundkörper 20 einer hydraulischen Spannmutter 6 aufgeschraubt. In dem Grundkörper 20 sind Hydraulikkanäle 22 vorgesehen, die nach außen durch Dichtungen 3 entsprechend abgedichtet sind. Dieses interne Hydrauliksystem wird mittels mehrerer radial angeordneter Druckschrauben 23 gespannt. Die Schrauben sind üblicherweise als Inbusschrauben ausgebildet. Die Hydraulikflüssigkeit preßt einen Ringkolben 24 gegen den federnden Flansch 18, der wiederum den Fräser 12 fest verspannt.

Bei dieser Ausführungsform können radial gerichtete Verstellkräfte, wie sie insbesondere durch die Schnittkraftbelastung beim Fräsen entstehen, nicht mehr auf den Ring kolben 24 einwirken, wodurch die Gefahr einer axialen Verschiebung des schwimmend gelagerten Ringkolbens vermieden ist, der ja wegen seiner schwimmenden Lagerung derartigen radialen Kräften keinen Widerstand entgegensetzen kann. Im dargestellten Ausführungsbeispiel werden diese Kräfte von dem federnden, tellerartigen Flansch 18 aufgenommen. Der Flansch 18 kann im Kontaktbereich zum Fräser 12 mit einem Material beschichtet sein, das den Reibungskoeffizienten erhöht, so daß die radiale Festlegung des Fräsers 12 noch verbessert wird.

Ein ungleichmäßiges axiales Ausfahren des Ringkolbens 24 beim Spannen führt somit nicht zu einem radialen Auswandern des Fräsers 12, da der zwischengeschaltete federnde Tellerflansch 18 diese ungleichförmige Bewegung kompensiert.

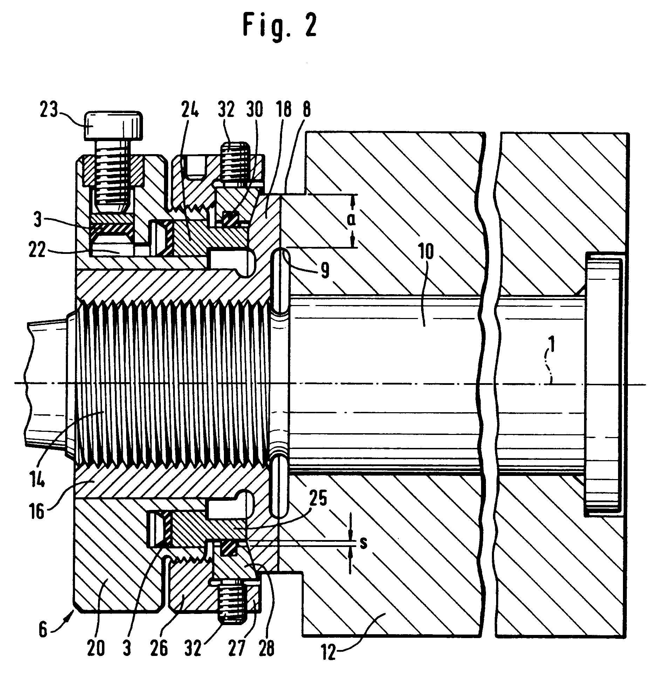

Eine verbesserte Ausführungsform der Erfindung ist in Fig. 2 schematisch dargestellt, wobei die Bauteile, die auch in der Ausführungsform nach Fig. 1 gezeigt sind, mit gleichen Bezugsziffern versehen sind. Auf das Ende des Dornes 14 ist wiederum eine Hülse 16 mit federndem Tellerflansch 18 aufgeschraubt. Die Hülse 16 trägt den Grundkörper 20 einer hydraulischen Spannmutter 6, die mittels der Schrauben 23 und dem Hydrauliksystem, bestehend aus Hydraulikanälen 22 und Dichtung 3 den Ringkolben 24 an den federnden Tellerflansch 18 anpreßt.

An einem im Durchmesser abgesetzten Außenumfang des Grundkörpers 20 ist ein Gewindering 26 angeordnet, der in Form einer Überwurfmutter ausgebildet ist und der in Richtung Tellerflansch 18 durch Schrauben verschoben werden kann. Zwischen dem Gewindering 26 und dem Tellerflansch 18 ist ein Kegeldruckring 28 angeordnet, der einen im Querschnitt keilförmigen Querschnitt hat und der mit relativ großem radialen Spiel s über dem Ringkolben 24 bzw. einer axialen Verlängerung 25 des Ringkolbens 24 sitzt. Zwischen Ringkolben 24 und Kegeldruckring 28 ist ein elastischer Ring, vorzugsweise ein Gummiring 30, angeordnet, der im entspannten Zustand für eine Zentrierung des Kegeldruckrings 28 sorgt, einer radialen Verstellung des Kegeldruckrings 28 aber nur geringen Widerstand entgegensetzt. Im Bereich des Überwurfes 27 des Gewinderinges 26 sind radiale Druckschrauben 32 angeordnet, die den Kegeldruckring 28 beaufschlagen und die eine gezielte radiale Verschiebung des Kegeldruckrings 28 ermöglichen. Beispielsweise hat ein Einschrauben der in Fig. 2 oberen Druckschraube 32 und Lösen der in Fig. 2 unteren Druckschraube die Wirkung, daß der Kegeldruckring 28 nach unten verschoben wird. Bedingt durch die Keilwirkung des konischen Kegeldruckrings wird der federnde Tellerflansch 18 in dem in Fig. 2 oben liegenden Bereich stärker axial nach rechts verlagert, wogegen der in Fig. 2 unten liegende Bereich des Tellerflansches 18 entlastet wird. Durch eine solche gezielte Beeinflussung der axialen Spannkräfte kann das System bestehend aus Spanndorn 14, Spannmutter 6 und Werkzeug 12 im Sinne optimaler Rundlaufeigenschaften ausgerichtet werden.

Nach erfolgter Justierung kann der Ringkolben 24 entlastet werden, der Tellerflansch 18 wird durch den Kegeldruckring 28 und Gewindering 26 in seiner justierten Lage gehalten. Auch hohe Schnittkraftbelastungen führen zu keiner Rundlaufabweichung des Werkzeugs 12. Die Systemsteifigkeit entspricht der, die bei Verwendung konventioneller mechanischer Bundmuttern erreicht werden kann, die jedoch nicht bei der Erfindung eine gezielte radiale Verstellung des Werkzeuges ermöglicht oder sogar möglich macht, daß ein abgeknicktes Dornende wieder axial ausgerichtet wird.

Selbstverständlich kann für bestimmte Anwendungsfälle der Druckkegelring 28 auch weggelassen werden. In diesem Fall wird der Gewindering 26 so ausgebildet, daß er den Tellerflansch 18 gleichmäßig beaufschlagt, so daß eine Entlastung des hydraulischen Ringkolbens 24 ermöglicht wird. Als elastischer Ring kann beispielsweise auch ein O-Ring aus Gummi vorgesehen werden.

Um einen guten Reibschluß zu erhalten, ist es zweckmäßig, daß der elastische Flansch 18 das Werkzeug 12 nur in einem kreisringartigen Bereich a beaufschlagt, dessen äußere Begrenzung 8 etwa der Außenumfang des Flansches 18 ist und dessen innere Begrenzung 9 einen vorgegebenen radialen Abstand von der Hülse 16 hat.

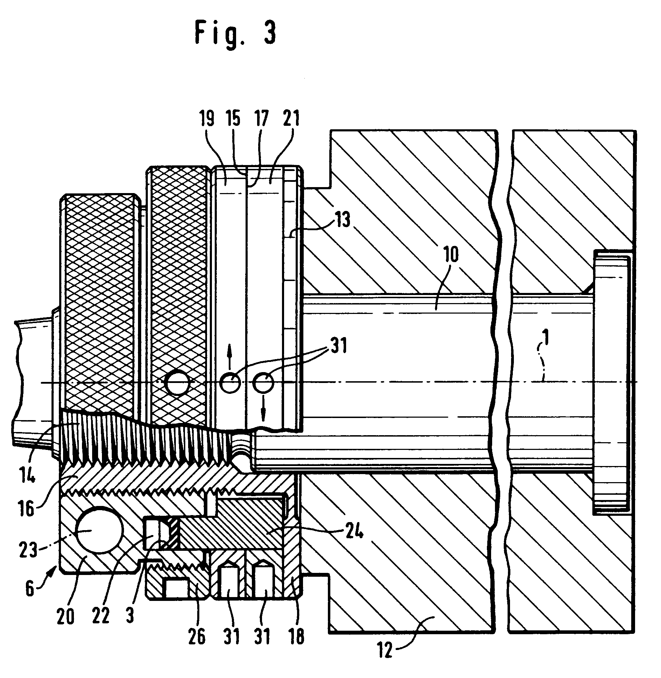

Bei der Ausführung nach Fig. 3 ist zwischen dem Gewindering 26 und dem federnden Flansch 18 ein Paar gegeneinander verdrehbarer Stellscheiben 19, 21, die auch als Stellringe ausgeführt sein können, angeordnet. Die einander zugewandten Planflächen 15, 17 dieser Stellscheiben 19, 21 haben eine genau vorgegebene, also vorbestimmte, Unparallelität, indem diese Flächen schräg zueinander verlaufen. Infolge dieser Unparallelität läßt sich durch gegenseitiges Verdrehen dieser Scheiben 19, 21 eine gewollte Unparallelität der voneinander abgewandten Planflächen genau einstellen. Da die Unparallelität nur wenige Tausendstel Millimeter groß ist - also im »-Bereich liegt -, konnte diese in den Zeichnungen nicht dargestellt werden. Hierzu haben die Stellscheiben 19, 21 eine in der Zeichnung schematisch dargestellte markierte Nullstellung, bei der beide Scheiben zusammen an jeder Stelle gleich dick sind und bei der die Aufnahmeöffnungen 31 am Außenumfang der beiden Scheiben parallel zueinander liegen. Mittels Einsteckschlüssel lassen sich die Scheiben in Richtung der eingezeichneten Pfeile gegeneinander verdrehen, so daß die Scheiben mit Hilfe einer Skala 13, die am Radialflansch 18 angebracht sein kann, zur Ausrichtung des Rundlaufes des Werkzeuges 12 in die genau richtige Position gegeneinander verstellt werden können. Bei dieser gegenseitigen Verdrehung der Scheiben wird infolge der aufeinanderliegenden Schrägflächen 15, 17 eine genau einstellbare Unparallelität der einander abgewandten Planflächen erzeugt und ein vorher ermittelter Rundlauffehler ausgeglichen, sobald der Gewindering festgedreht und die Hydraulik ganz oder teilweise entlastet ist.

## Patentansprüche

1. Hydraulisches Spannelement zur axialen Verspannung von Rotationskörpern (12), beispielsweise scheiben- oder walzenförmigen Werkstücken, Werkzeugen oder dgl. auf einem rotierbaren Dorn (10) mit einem auf dem Dorn festgelegten Grundkörper (20) und einem im Grundkörper schwimmend gelagerten Ringkolben (24), der über ein in sich geschlossenes Hydrauliksystem mittels Druckelementen, beispielsweise Druckschrauben (23), relativ zum Grundkörper axial verschiebbar ist und das Werkstück oder Werkzeug (12) axial fest verspannt,
gekennzeichnet durch ein mit dem Grundkörper (20) verbundenes Federelement (18), das einerseits von dem schwimmenden Ringkolben (24) beaufschlagt und andererseits gegen das Werkzeug (12) anlegbar ist.

2. Spannelement nach Anspruch 1,
dadurch gekennzeichnet, daß das Federelement als federnder Flansch (18) ausgebildet ist.

3. Spannelement nach Anspruch 1 oder 2,
dadurch gekennzeichnet, daß der federnde Flansch (18) an einer Hülse (16) vorgesehen ist, die mit dem Dorn (10) verspannt ist.

4. Spannelement nach einem der Ansprüche 1 bis 3,
dadurch gekennzeichnet, daß auf dem Grundkörper (20) ein Gewindering (26) aufgeschraubt ist, der axial gegen den federnden Flansch (18) drückt, so daß auch nach Entlastung des hydraulischen Ringkolbens (24) die auf das Werkzeug (12) wirkende Axialkraft aufrechterhalten bleibt (Fig. 2).

5. Spannelement nach Anspruch 4,
dadurch gekennzeichnet, daß zwischen dem Gewindering (26) und dem federnden Flansch (18) ein Kegeldruckring (28) vorgesehen ist, der radiales Spiel (s) aufweist und dessen dem Flansch (18) zugewandte Seite kegelig bzw. konisch ausgebildet ist, so daß der Querscnnitt einen zur Mittelachse (1) gerichteten Keil bildet, und daß Verstellmittel (32) vorgesehen sind, mit denen der Druckring (28) radial verstellbar ist, wodurch eine entsprechende Verlagerung des Flansches (18) erreichbar ist.

6. Spannelement nach Anspruch 5,
dadurch gekennzeichnet, daß der Gewindering (26) den Kegeldruckring (28) mit einem Überwurf (27) übergreift, und daß in diesem Überwurf (27) mindestens eine, vorzugsweise mehrere Druckschrauben (32) vorgesehen sind, die auf den Kegeldruckring (28) einwirken und dessen radiale Verstellung ermöglichen.

7. Spannelement nach Anspruch 5 oder 6,
dadurch gekennzeichnet, daß der Kegeldruckring (28) gegenüber dem Ringkolben (24) mit einem elastischen Ring (30),vorzugsweise einem O-Ring, zentriert ist.

8. Spannelement nach einem oder mehreren der Ansprüche 1 bis 7,
dadurch gekennzeichnet, daß der elastische Flansch (18) das Werkzeug (12) nur in einem kreisringartigen Bereich (a) beaufschlagt, dessen äußere Begrenzung (8) etwa der Außenumfang des Flansches (18) ist und dessen innere Begrenzung (9) einen radialen Abstand von der Hülse (16) hat.

9. Spannelement nach einem oder mehreren der Ansprüche 1 bis 8,
dadurch gekennzeichnet, daß zwischen Gewindering (26) und federndem Flansch (18) ein Paar gegeneinander verdrehbare Stellscheiben (19, 21) vorgesehen sind, deren Planflächen (15, 17) um ein vorbestimmtes Maß unparallel zueinander sind, derart, daß durch gegenseitige Verdrehung der Stellscheiben (19, 21) eine bstimmte Unparallelität der voneinander abgewandten Planflächen zur genauen Einstellung von Rundlauffehlern definiert einstellbar ist.

10. Spannelement nach Anspruch 9,
dadurch gekennzeichnet, daß die Stellscheiben (19, 21) eine Einstellmarkierung aufweisen, die vorzugsweise am Flansch (18) vorgesehen ist.

11. Spannelement nach Anspruch 9 oder 10,
dadurch gekennzeichnet, daß die Stellscheiben (19, 21) am Außenumfang Aufnahmeöffnungen (31) für ein einsteckbares Verdrehwerkzeug aufweisen.

12. Spannelement nach einem der Ansprüche 1 bis 3,
dadurch gekennzeichnet, daß die Hülse (16) auf den Grundkörper (20) aufgeschraubt ist.

## Claims

1. Hydraulic clamping device for the axial clamping of bodies of rotation (12), for example disc-shaped or cylindrical work-pieces, tools or the like on a rotatable mandrel (10) with a base member (20) fixed to the mandrel and an annular piston (24) mounted to float in the base member, which annular piston is axially displaceable relative to the base member by way of a closed hydraulic system by means of pressure members, for example pressure screws (23) and which clamps the work-piece or tool (12) in an axially secure manner, characterised by a spring member (18) connected to the base member (20), which member is acted upon on one side by the floating annular piston (24) and on the other side may be applied against the tool (12).

2. Clamping device according to Claim 1, characterised in that the spring member is constructed as a resilient flange (18).

3. Clamping device according to Claim 1 or 2, characterised in that the resilient flange (18) is provided on a sleeve (16), which is clamped to the mandrel (10).

4. Clamping device according to one of Claims 1 to 3, characterised in that screwed onto the base member (20) is a threaded ring (26), which presses axially against the resilient flange (18), so that even after removing the load on the hydraulic annular piston (24), the axial force acting on the tool (12) is maintained (Figure 2).

5. Clamping device according to Claim 4, characterised in that provided between the threaded ring (26) and the resilient flange (18) is a conical thrust ring (28), which has a radial clearance (s) and whereof the side facing the flange (18) is constructed to be tapered or conical, so that the cross-section forms a wedge directed towards the central axis (1), and that adjusting means (32) are provided, by which the thrust ring (28) is radially adjustable, due to which a corresponding displacement of the flange (18) can be achieved.

6. Clamping device according to Claim 5, characterised in that the threaded ring (26) engages over the conical thrust ring (28) by a projection (27), and that provided in this projection (27) is/are at least one, preferably several pressure screws (32), which act on the conical thrust ring (28) and facilitate its radial adjustment.

7. Clamping device according to Claim 5 or 6, characterised in that the conical thrust ring (28) is centered with respect to the annular piston (24) by a resilient ring (30), preferably an O-ring.

8. Clamping device according to one or more of Claims 1 to 7, characterised in that the resilient flange (18) acts on the tool (12) solely in a region (a) in the shape of a circular ring, whereof the outer boundary (8) is approximately the outer periphery of the flange (18) and whereof the inner boundary (9) is at a radial distance from the sleeve (16).

9. Clamping device according to one or more of Claims 1 to 8, characterised in that provided between the threaded ring (26) and resilient flange (18) is a pair of adjusting discs (19, 21) able to rotate with respect to each other, whereof the plane faces (15, 17) are non-parallel to each other by a certain amount so that due to mutual rotation of the adjusting discs (19, 21), a certain non-parallelism of the plane faces remote from each other can be adjusted in a definite manner for the exact cessation of concentricity errors.

10. Clamping device according to Claim 9, characterised in that the adjusting discs (19, 21) have an adjusting marking, which is preferably provided on the flange (18).

11. Clamping device according to Claim 9 or 10, characterised in that on the outer periphery the adjusting discs (19, 21) have receiving openings (31) for a rotating tool which can be inserted.

12. Clamping device according to one of Claims 1 to 3, characterised in that the sleeve (16) is screwed onto the base member (20).

## Revendications

1. Dispositif de serrage hydraulique pour le serrage axial de solides de révolution (12), de pièces, outils, ou autres, en forme de disques ou de cylindres, par exemple, sur une broche rotative (10), avec un corps de base (20) fixé sur la broche, et avec un piston annulaire (24) flottant dans le corps de base, ce piston pouvant être déplacé dans le sens axial par rapport au corps de base, par l'intermédiaire d'un système hydraulique fermé en soi, au moyen d'éléments de pression, de vis de pression (23) par exemple, et serrant fermement la pièce ou l'outil (12) dans le sens axial, caractérisé par un élément élastique (18), assemblé avec le corps de base (20), sollicité par le piston annulaire flottant (24), d'une part, et pouvant s'appliquer contre l'outil (12), d'autre part.

2. Dispositif de serrage suivant la revendication 1, caractérisé en ce que l'élément élastique est réalisé sous forme de bride élastique (18).

3. Dispositif de serrage suivant l'une des revendications 1 et 2, caractérisé en ce que la bride élastique (18) est prévue sur une douille (16), serrée avec la broche (10).

4. Dispositif de serrage suivant l'une quelconque des revendications 1 à 3, caractérisé en ce qu'une bague filetée (26), qui exerce une pression axiale contre la bride élastique (18), est vissée sur le corps de base (20), de sorte que la force axiale, exercée sur l'outil (12), reste maintenue même après le soulagement du piston annulaire hydraulique (24) (figure 2).

5. Dispositif de serrage suivant la revendication 4, caractérisé en ce qu'une bague de pression conique (28) est prévue entre la bague filetée (26) et la bride élastique (18), cette bague présentant un jeu radial (s) et son côté, tourné vers la bride (18), ayant une réalisation cunéiforme et/ou conique, de sorte que la section transversale forme une clavette orientée en direction de l'axe médian (1), et en ce que des moyens de réglage (32) sont prévus pour déplacer la bague de pression (28) dans le sens radial, un déplacement correspondant de la bride (18) pouvant être de ce fait obtenu.

6. Dispositif de serrage suivant la revendication 5, caractérisé en ce que la bague filetée (26) enserre la bague de pression conique (28) par une collerette (27), et en ce qu'une vis de pression, au moins, plusieurs vis de pression (32) de préférence, qui agissent sur la bague de pression conique (28), dont elles permettent le déplacement radial, sont prévues dans cette collerette (27).

7. Dispositif de serrage suivant l'une des revendications 5 et 6, caractérisé en ce que la bague de pression conique (28) est centrée par rapport au piston annulaire (24) par une bague élastique (30), un joint torique de préférence.

8. Dispositif de serrage suivant l'une quelconque ou plusieurs des revendications 1 à 7, caractérisé en ce que la bride élastique (18) ne sollicite l'outil (12) que dans une zone (a) en forme d'anneau de cercle, dont la délimitation externe (8) correspond à peu près au pourtour externe de la bride (18), et dont la délimitation interne (9) présente une distance radiale par rapport à la douille (16).

9. Dispositif de serrage suivant l'une quelconque ou plusieurs des revendications 1 à 8, caractérisé en ce qu'une paire de disques de réglage (19, 21), pouvant être tournés l'un par rapport à l'autre, est prévue entre la bague filetée (26) et la bride élastique (18), les surfaces planes (15, 17) de ces disques présentant un défaut de parallélisme mutuel, d'une valeur prédéfinie, de sorte qu'une rotation mutuelle des disques de réglage (19, 21) permet de régler un défaut de parallèlisme défini des surfaces planes, opposées l'une à l'autre, pour un réglage précis des erreurs de fauxronds.

10. Dispositif de serrage suivant la revendication 9, caractérisé en ce que les disques de réglage (19, 21) présentent un repère de réglage, prévu de préférence sur la bride (18).

11. Dispositif de serrage suivant l'une des revendications 9 et 10, caractérisé en ce que les disques de réglage (19, 21) présentent sur leur pourtour externe des ouvertures de réception (31) pour un outil de torsion insérable.

12. Dispositif de serrage suivant l'une quelconque des revendications 1 à 3, caractérisé en ce que la douille (16) est vissée sur le corps de base (20).
